# EUROPEAN PATENT SPECIFICATION

(11) **EP 4 186 049 B1**
(45) Date of publication and mention of the grant of the patent: **21.05.2025**
(21) Application number: 20746145.0
(22) Date of filing: 22.07.2020
(51) Int. Cl.: G08G 1/01, G01V 3/12, G01S 5/02

(54) **METHOD AND COMPUTER SYSTEM DETERMINING A REPRESENTATION OF A PARAMETER**
VERFAHREN UND COMPUTERSYSTEM ZUR BESTIMMUNG EINER DARSTELLUNG EINES PARAMETERS
PROCÉDÉ ET SYSTÈME INFORMATIQUE DÉTERMINANT UNE REPRÉSENTATION D'UN PARAMÈTRE

(43) Date of publication of application: 31.05.2023
(73) Proprietor: Telefonaktiebolaget LM ERICSSON (PUBL), 16483 Stockholm (SE)
(72) Inventor: CATOVIC, Armin, 169 32 Stockholm (SE)
(74) Representative: Ericsson
(86) International application number: PCT/EP2020/070643
(87) International publication number: WO 2022/017596

(56) References cited:
- US-A1- 2019 277 957
- US-A1- 2019 277 957

## Description

### TECHNICAL FIELD

The invention relates to a computer system comprising network nodes for determining a representation of at least one parameter associated with an environmental categorization of an area, a method for a computer system, a computer program, and a computer program product.

### BACKGROUND

Inferring road traffic conditions in real-time is important for several different applications. Firstly, an example would be that, knowing traffic congestion spots can assist optimal route planning, something that is becoming increasingly important for ride-hailing, ridesharing, food delivery, and courier services, as they are heavily dependent on estimated time of arrival (ETA). Non-optimal routes lead to unnecessary increases in fuel consumption and wear-and-tear (e.g. burning of rubber tires due to friction and more rubber and road particles in the air), both of which induce significant financial cost on transport operators, as well as leading to both exhaust emissions, such as carbon dioxide (CO2), nitrogen oxide (NOx), particles, and non-exhaust emissions, the latter becoming ever more important due to uptake of electric vehicles (EVs), which are heavier than petroleum based ones. Secondly, knowing various traffic metrics in real-time, such as traffic flow, average speed, and traffic density, opens up for more dynamic public transport infrastructure optimizations, such as dynamically adjusting traffic light timing based on current traffic flow.

The current methods of inferring traffic conditions are either based on manual traffic counting, automatic traffic counting, or by collecting telemetry from smartphones and in-vehicle sensors such as GPS navigation systems and dedicated sensors in trams and buses. Manual traffic counting involves human observers who visually count traffic and report the tally either on a sheet or via an app or specialized handheld device. Manual methods also involve individuals reporting traffic incidents by contacting the local traffic authority. Automatic traffic counting includes installation of both permanent as well as temporary traffic counting devices. These electronic devices often involve sensors (pneumatic tubes, piezo-electric sensors, and inductive loops) placed on the road surface; changes in electric charge due to mechanical stress (e.g. by a passing vehicle) are then used to detect and tally traffic. Off-road sensors can also be used, such as infrared beams, radar, and cameras.

When it comes to smartphone and in-vehicle sensor data collection for traffic reporting purposes, it is generally done using GPS coordinates tracking of users and vehicles. In the case of smartphones, by estimating the speed at which the user is moving, combined with GPS coordinates of known roads, one can infer whether the user is inside a moving vehicle.

US 8965695 B2 relates to a hierarchical floating car data network which comprises a central server, an egress point network, and a participating vehicle network. The egress point network is in communication with the central server. The egress point network comprises a plurality of egress points. The participating vehicle network comprises a plurality of participating vehicles. Some of the plurality of participating vehicles are in direct communication with each other and with at least some of the plurality of egress points. Furthermore, at least some of the plurality of participating vehicles may be in communication with the central server. A geographic database is formed from content communicated between the elements of the hierarchical floating car data network.

US 2019/0297459 A1 relates to systems and methods for detecting the presence of a body in a network without fiducial elements, using signal absorption, and signal forward and reflected backscatter of Radio Frequency waves caused by the presence of a biological mass in a communications network.

US 010408913 B2 relates to systems and methods of using a machine learning model to detect physical characteristics of an environment based on radio signal data. A system uses a radio signal receiver for collecting noise floor signal data comprising radio signal data from an environment within a predetermined proximity of the radio signal receiver. The system implements a trained deep machine learning classifier that is trained to classify one or more physical characteristics of the environment based on the radio signal data.

US 2019/277957 A1 discloses methods and apparatus for extracting the features of either a set of power spectrum density measurements or a set of pre-processed frequency domain real and imaginary portions of uplink (UL) Sounding Reference Signals (SRSs) measurements and feed the features to an Artificial Intelligence (AI) classifier for User Equipment (UE) speed estimation.

### SUMMARY

An object of the invention is to enable dynamic traffic flow management, such as variable speed limit and traffic light timing, by enabling real-time traffic counts, for example, per vehicle category.

This object is solved by the subject matter of the independent claims. Preferred embodiments are defined by the dependent claims.

### BRIEF DESCRIPTION OF THE DRAWINGS

The invention is now described, by way of example, with reference to the accompanying drawings, in which:
Figs. 1-2 illustrate a computer system according to some embodiments,
Figs. 3-4 are flow charts illustrating exemplary methods of determining a parameter of an area,
Fig. 5 illustrates an area and network node of the invention with respect to embodiments thereof,
Fig. 6 exemplifies variants of environmental categorization,
Fig. 7 illustrates an example of distributed nodes according to embodiments, and
Fig. 8 is a block diagram of a computer system according to embodiments.

### DETAILED DESCRIPTION

The invention will now be described more in detail hereinafter with reference to the accompanying drawings, in which certain embodiments of the invention are shown. This invention may, however, be embodied in many different forms and should not be construed as limited to the embodiments set forth herein; rather, these embodiments are provided as examples of embodiments within the claimed scope.

It is to be understood that the singular form "a," "an," and "the" include plural referents unless the context clearly dictates otherwise. It will be further understood that the terms, "comprises" "comprising", "includes" and/or "including" when used herein, specify the presence of stated features, integers, steps, operations, elements, and/or components, but do not preclude the presence or addition of one or more other features, integers, step, operations, elements, components, and/or groups thereof.

An advantage of embodiments of the invention will be the enabling of monitoring of traffic in areas without the need to provide specific infrastructure components or excessive human resources to accomplish such tasks. It also enables the ability to have an overview of traffic flow, what type of traffic the traffic comprises of, and movements of traffic in specific areas. This will enable insights into traffic management systems, including visualizations of traffic hotspots, enable ease of heavy-traffic burdened areas and allows the user of the invention to supply further detailed information such as real-time optimal route planning, and future traffic predictions due to the continues generation and analysis of real time data.

According to the invention, a machine learning model is trained. The training is done by using a set of training data. The machine learning model can use several sets of training data to reinforce the machine learning model training. The set of training data is representative of a radio frequency characteristic or a performance management counter. A variety of input parameters, from none, one or a plurality, that can be controlled for, may be used by the machine learning model to account for any difference between use cases of the machine learning model. The machine learning model can be a Bayesian model. The Bayesian model may be such that one can encode a model using prior real-world knowledge corresponding to various parts of the model.

As used herein, examples of input parameters that can be controlled for may be, traffic information, congestion information, communal traffic route, communal traffic timetable, and the base station's cell configuration data, e.g. a cell id, a cell name, a bandwidth, a longitude, a latitude, a bearing, an angle, a radius, a cell range, a cell capacity, a downlink channel bandwidth, an uplink channel bandwidth, a band, a downlink frequency, and an uplink frequency.

An area is represented using one or more parameters where the parameter is associated with an, or several, environmental categorizations of the area. The parameter can be a numerical value, a text, a symbol, binary code, or other type of information display, representing for example a vehicle flow rate, a vehicle count, and a vehicle type. The term "environmental categorization," as used herein, refers to a categorization of a physical environment dependent upon attributes attributed to a one or more conditions of the physical environment. The environmental categorization of the area is any one or a combination of the following, a high-rise area, suburban houses, a park, a garage, a congested area, high traffic, low traffic, medium traffic, no traffic, many pedestrians, no pedestrians, dense wood, sparse tree, open field, lake, mountainous, hilly, rocky, fallow farmland, farmland, crops, grazing pasture, subway, fast traffic flow, and slow traffic flow or other reasonable representation of a categorization of the area. The term environmental categorization embodies a way to infer a characteristic of the area at a specific point in time, such as the state of the area at the current point in time. In one embodiment the specified point in time is offset from the current time, by a time period selected from any of: a number of minutes, a number of hours, a number of days, a number of weeks, a number of months and a number of years, in the past. According to another embodiment the represented point in time is set in the future, offset from the current time, by a time period selected from any of: a number of hours, a number of days, a number of weeks, a number of months and a number of years. Alternatively, in another embodiment, the time is a specified time interval spanning the range of a number of minutes, a number of hours, a number of days, a number of weeks, a number of months and a number of years, or variants thereof. This entails a continuum of points in time; either past, present or future is possible for the area.

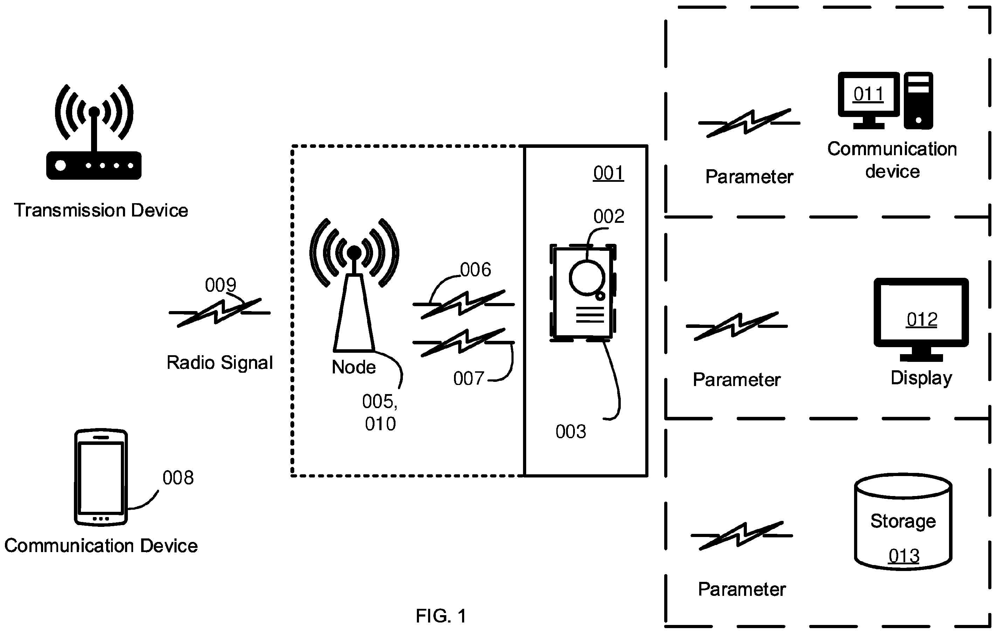

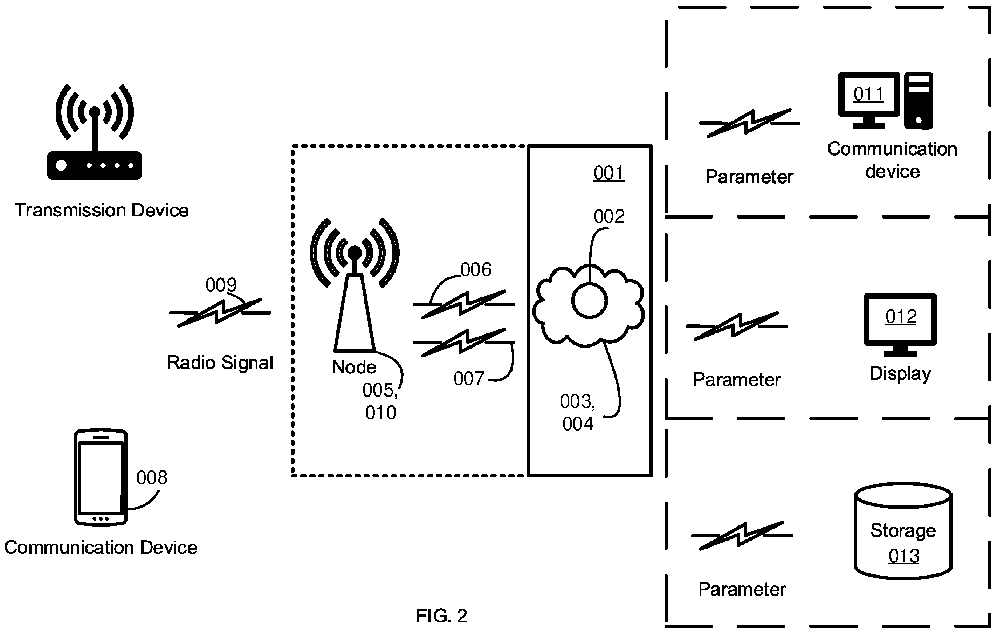

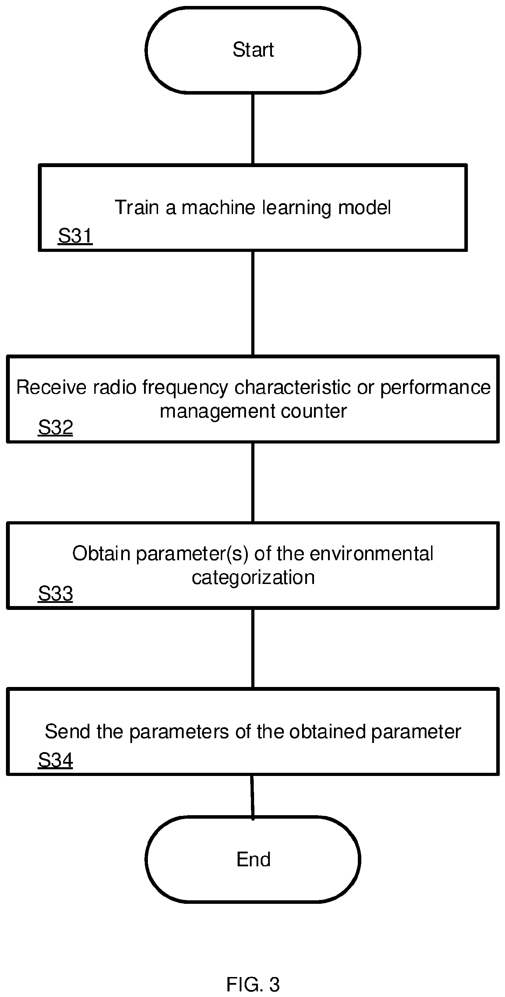

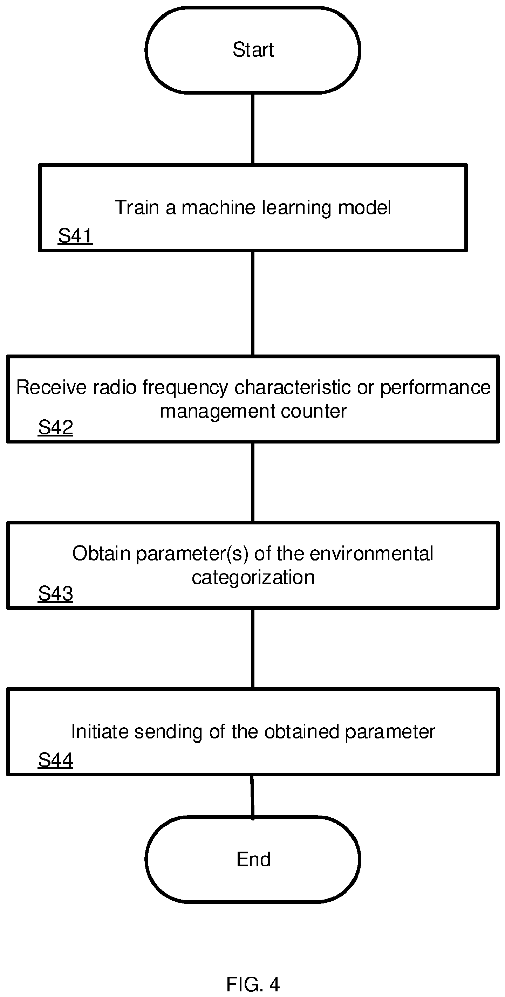

Fig 1 and fig 2 illustrate a computer system 001.The computer system 001 comprises a machine learning model 002 and one or more network nodes 003. The machine learning model 002 refers to a mathematical model based on sample data, computational neural network-based decisions, or supervised learning system. Fig 1 and fig 2 show the machine learning model 002 as located as data and software stored and processed within the network node 003. As illustrated in fig 1, the network node 003 is a physical network device, such as in a radio access network device, a radio core network device, a distributed networks system node and, in fig 2, a distributed computing platform (e.g a cloud computing platform) node 004 such as a server, or a virtual network node which can be implemented in a cloud. The two figures further illustrate embodiments where another network node, a radio network node 005, e.g. in the form of a radio base station (e.g. 010 as mentioned below) in the form of a standardized base station such as nodeB or evolved NodeB (eNB), for Long Term Evolution or gNodeB for New Radio (NR), is transmitting a radio frequency characteristic, 006, to the computer system 001. It will be appreciated by the person skilled in the art that the radio frequency characteristic 006 can be exposed in a performance management counter 007. In other words, the radio frequency characteristic 006 may be a part of the performance management counter 007. In other words, fig 1 and fig 2 illustrate the computer system 001 as receiving the radio frequency characteristic 006 or the performance management counter 007. According to one embodiment illustrated in fig 1, the radio frequency characteristic 006 is derived from a transmission from a communication device 008. For example, the communication device 008 transmits radio signals 009 to a radio base station 010, which is the radio network node 005. The radio base station 010 then performs at least any one of: to capture, to measure and to record, the radio frequency characteristic 006 of the transmitted radio signals 009 in the performance management counter 007 of an operations support system (OSS). The radio frequency characteristic 006 or the performance management counter 007 are then subsequently sent by the radio base station 010, .e.g as JSON encoded HTTP POST message, and received by the computer system 001 where they are processed according to a method illustrated in the flowcharts in either fig 3 and 4, which are described in more detail below. In other words, an embodiment comprises gathering of information at the radio base station 010, sending out the information from the radio base station, and receiving the information by the computer system 001. The radio base station 010 provides radio connectivity to a plurality of wireless terminals or communication devices such as, for example, the communication device 008, and a second communication device 011.

The network node 003 may in another embodiment be the radio network node 005 as indicated with a dashed line in figure 1. It will be appreciated that the radio network node 005 may refer to a base station as mentioned above, a base transceiver station, an access point, a network control node such as a network controller, a radio network controller, a base station controller, and the like or some combination thereof. The network node 003 may, in an embodiment, be a modem, hub, bridge, switch or other data communication equipment, or a data terminal equipment such as a host computer.

As used herein, the term radio frequency characteristic 006, represents a characteristic of a radio wave frequency. This radio frequency characteristic 006 can be a value of or can be derived from, the effects of reflection, refraction, polarization, diffraction, free-space loss, aperture-medium coupling loss, absorption, or others. The radio frequency characteristic 006 can also be based upon the effect that occurs, such as pathloss, uplink-pathloss, path attenuation, received power, transmitted power, transmitter gain, transmitter losses, receiver gain, receiver losses, Doppler shifts, or Doppler shift spreads. As used herein, the term, performance management counter 007 may be data received from a network element in a mobile network operators' network or support system. The performance management counter 007 or radio frequency characteristic 006 may also be received from a telecommunications service provider's business support system. The performance management counter 007 may further contain information such as the timing advance (TA) index and number of successful radio resource control (RRC) connections counted. As an example of where one or more radio frequency characteristics are captured is in a radio access network (RAN), is the radio base station, with the radio base stations comprises such as mentioned above. These can be exposed via performance management counts on the north-bound interface to the radio access network's OSS.

As used herein the term communication device 008, which may be known as a "wireless terminal" or a "User Equipment" (UE), which may further refer to a mobile phone, a cellular phone, a Personal Digital Assistant (PDA), equipped with radio communications capabilities, a smart phone, iPAD, USB dongle e.g. with a radio modem, a laptop or personal computer, PC, equipped with an internal or external mobile broadband modem, a tablet PC with radio communication capabilities, laptop embedded equipment, a laptop mounted equipment, a device to device UE, a machine type UE or UE capable of machine to machine communications, customer premises equipment, a portable electronic radio communication device, a sensor device equipped with radio communication capabilities, a telematics unit within a vehicle or the like. In particular, the term "communication device" should be interpreted as non-limiting terms comprising any type of wireless device communicating with a radio network node in a cellular or a mobile communication system.

The information exchange between the network node 003 and the computer system 001 can be facilitated by one or more service architectures including but not limited to Simple Object Access Protocol (SOAP), Representational State Transfer (REST) and Remote Procedure Call (RPC). The service architectures utilize a number of application layer protocols including Hypertext Transfer Protocol (HTTP), Simple Mail Transfer Protocol (SMTP), Secure Shell (SSH), and File Transfer Protocol (FTP). Data encoding and representation can take form of JavaScript Objection Notation (JSON), Extensible Markup Language (XML), as well as binary data encoding including but not limited to Protocol Buffers (Protobuf) as well as FlatBuffers.

For example, initial configuration management data related to 4G/5G cell configuration (e.g. cell-id, frequency, bandwidth, longitude, altitude, etc) is sent from a mobile network operator to the computer system 001 as JSON encoded objects via HTTP POST messages.

The computer system uses the received configuration management data from the mobile network operator together with a suitable radio wave propagation model (e.g. Okumura-Hata) as well as auxiliary data from mapping services (e.g. OpenStreetMap) and traffic authorities to create an internal representation of a cell and its coverage area. From the computer systems point of view a cell will now be considered as a traffic counter or a sensor, responsible for counting traffic on the roads within its estimated coverage area.

Performance management data such as uplink path loss are then periodically extracted from the performance management data stored in the OSS and sent from the mobile network operator to the computer system 001 as JSON encoded objects via HTTP POST messages. The computer system maps the Performance Management counters to their respective cells (internal cell/sensor representation), and applies the machine learning model to infer traffic characteristics such as vehicle flow rate and vehicle counts. The estimated traffic characteristics can in some embodiments be stored internally in the computer systems data storage.

An insight consumer, such as a city municipality, can then request traffic data by sending a HTTP GET message to the computer system's REST endpoint. The computer system responds by sending JSON encoded data containing traffic flow information.

Further, fig 1 and fig 2 illustrate the information being transmitted or sent from the computer system 001 comprising the machine learning model 002 to any one, more than one, or all the following: a second communication device 011, a display 012 of e.g. a third-party outside of the computer system 001, and a storage device 013, the storage is in some embodiments localized within the computer system. In an embodiment the information is a parameter associated with the environmental categorization of an area.

Fig 3 and fig 4 illustrate embodiments of a method performed by the computer system 001. Fig 3 illustrates an embodiment for determining a representation of at least one area; training, S31, the machine learning model 002; receiving, S32, information, where the information is the radio frequency characteristic 006 or the performance management counter 007; and obtaining, S33, the parameter of the environmental categorization, in one example, the obtaining is performed from a machine learning model comprised within the computer system, the machine learning model is applied on the received information to infer the parameters, another example is where the computer system access the machine learning model by sending the received information to a machine learning model located outside the computer system, which is then applied on the information and then the inferred parameters are obtained. Further, fig 3 illustrates the method further comprising, sending, S34, the parameter of the obtained environmental categorization e.g. as JSON encoded data in a HTTP POST message. In some embodiments illustrated in fig 4, the method comprises training S41 the machine learning model 002; receiving S42 information, which is the radio frequency characteristic 006 or the performance management counter 007, and obtaining S43 the parameter of the environmental categorization. Further illustrated in figure 4, is that the embodiment of the method here also comprises initiating, S44, the sending of the information. To train, S31, S41, the machine learning model 002, the computer system 001 uses a set of training data. The training data is representative of radio frequency characteristics and/or information contained within performance management counters. Further, the training of the machine learning model 001 can be an iterative process, with the training of the machine learning model 001 occurring across several dependent training steps. In other words, the machine learning model 001 is trained, in one or several stages, to interpret and act upon information that the computer system 001 has access to, by using data representative of the information or other complementing information, enabling an interpretation/inference of a location's physical characteristics.

In certain embodiments the information is received, S32, S42, from the radio network node 005. The information that is received, S32, S42, may contain, data traffic, the performance management counter 006, an environmental categorization, a forecast of the environmental categorization, i.e. a forecast of the parameters representing the environmental categorization, the radio frequency characteristic 007, and/or any other suitable information such as a country id, an operator id, a node id, a measurement time or a timestamp, a measurement period, a cell id, a cell name, a counter e.g. of vehicle types, a number of successful RRC connections established, and a pathloss value e.g. a pathloss distribution in decibels.

The information exchange may be facilitated by the several service architectures explained above. To obtain, S33, S43, the parameter the received information is processed using the machine learning model 002. In other words, the parameter that is associated with the representation of the environmental categorization, is obtained by processing received information with the machine learning model 002. The obtained parameter is transmitted or sent S34 by the computer system 002. The sending or transmission may be to the second communication device 011, the storage 013 or a processing node outside of the computer system or a network node of the computer system (not illustrated).

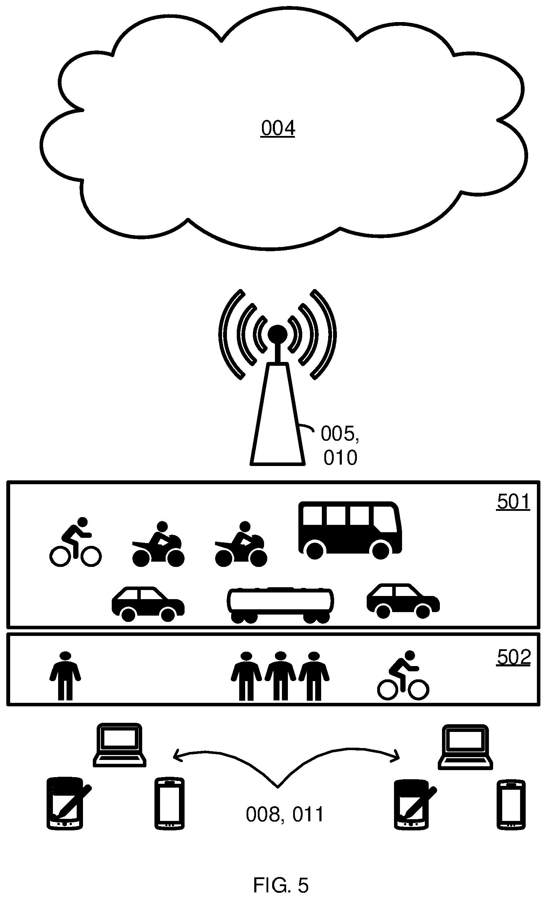

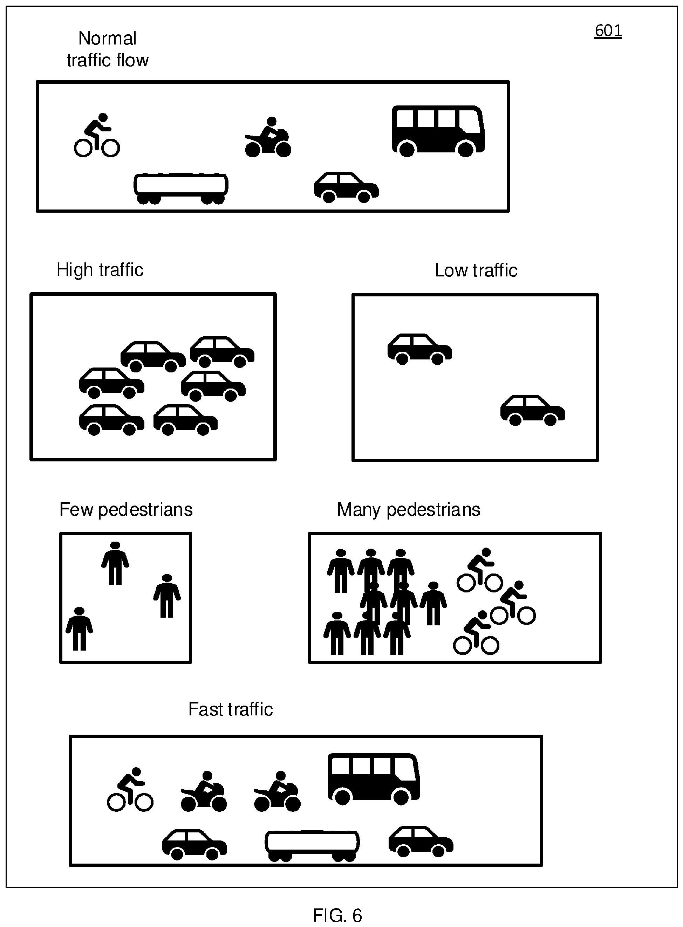

Fig 5 illustrates embodiments wherein the communication device 008, and at least the second communication device 011 are shown as being present at a location. Two exemplary areas, 501 and 502, are illustrated between the communication devices 008, 011, and a receiver of radio signals, which in this case is the radio network node 005, which can be the base station 010. Both trafficked areas, 501, 502 environmental conditions are determined in the form of the environmental categorization, examples of which will be described further with reference to fig 6. The radio frequency characteristics 006 of the signals transmitted from the communications devices 008,011 are captured in the radio network node 005 and further transmitted to the computer system 001 embodied as a single network node, or as illustrated in fig 5, a distributed computing platform, 004.

The areas may be others than those represented in fig 5 and it is merely for illustrative purposes to highlight various areas that may be comprised in the embodiments of the disclosure. The area, representing a geographical area represented by e.g. geographical coordinates or a name or a word or a numerical value, may be the vehicular trafficked area 501 where such an area could be or comprise one or more of at least a road, a highway, a sidewalk, a garage, a bridge, a car park, and other terrain and areas traversed by vehicular traffic. The area is in an embodiment the pedestrian trafficked area 502. The pedestrian area 502 may be or comprise at least one or more of at least a sidewalk, a park, a forest path, a road, a shopping mall, a subway station, and other area traversed by a pedestrian. The pedestrian trafficked area is an area traversed by a human, which can be an area traversed using a car such as a road, parking area, and gas station. The area could further be areas traversed by a human using others means such as bicycle or walking. In other words, the area may also comprise a walkway, a crosswalk, a bicycle path, a housing building, a park, and further variants thereof. The area in yet another embodiment, is an area such as a landscape area, which may be a lake, a forest, a mountain, and a field, and variants thereof. The area is located near a site/device that can receive and, in some embodiments, process signals, which in an embodiment represented in fig 5, is the radio network node 005.

As used herein, the area, could further be any region of a landscape, where the region of the area could be any size, but commonly the area may be the region within range of a radio network node. The range can be several hundreds of meters, up to 1000 meters, with the range further being specified to be between 0-600 meters. The range is dependent on the carrier frequency with more precise measurement at smaller distance using higher frequencies. The person skilled in the art will appreciate that with new technologies the effective range can be expanded to beyond 1000 meters.

Another embodiment of the invention is where the environmental categorization parameter, in Fig 6 indicated as 601, indicates vehicular traffic congestion or pedestrian traffic congestion in the area. Examples of what can be indicated in the environmental categorization parameter 601 is further illustrated in figure 6. The environmental categorization parameter 601 is in some embodiments related specifically to details regarding traffic congestion activities, which may be the numbers of vehicles or pedestrians, the flow rate of such objects, which could be as a rate of change in the area across time, or a count per unit time. Further, the flow rate may also be defined descriptively such as high rate of traffic, high traffic, medium amount of traffic, and/or low traffic flow, slow traffic, or variants thereof. Further information is also the types of objects moving in the area. A non-exhaustive but representative list of what objects of the embodiment may be is any one of the following: car, van, bus, lorry, tram, bicycle, moped, motorcycle, caravan, tanker, trailer, construction vehicle, cyclist, all-terrain-vehicle, four-wheeler, train, scooter, electric scooter, pedestrian. These objects may be described in numerical terms where the parameters are, for example; "four cars, three pedestrians, one bus, two mopeds", and is a representation of the area.

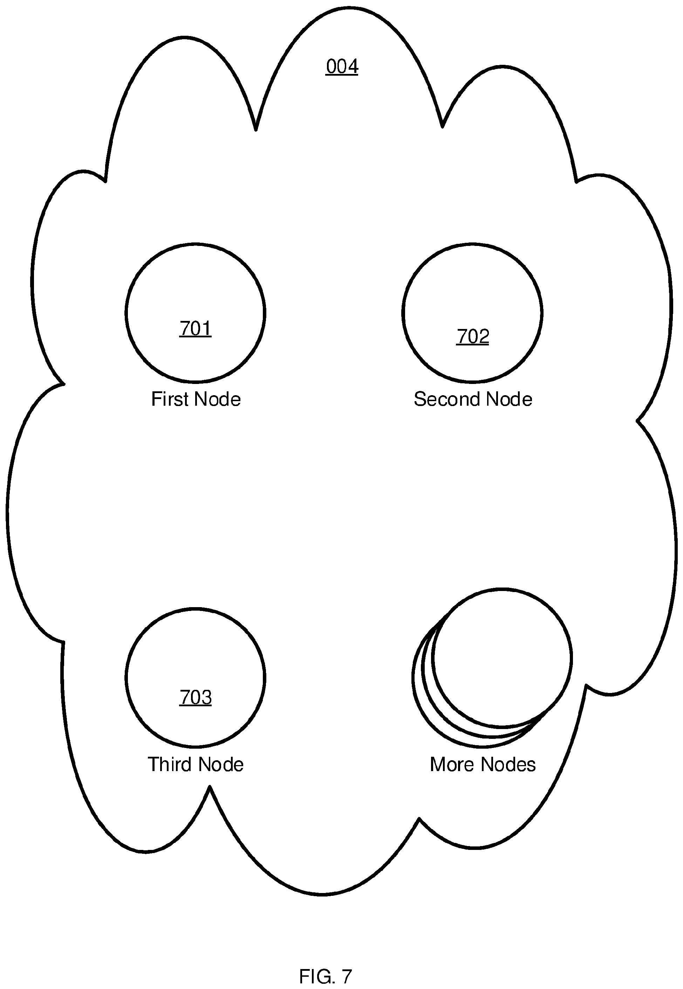

Another embodiment, partially illustrated in fig 7, is a computer system 001, consisting of a multitude of network nodes 003 as described above where the training S31, S41 of the machine learning model 002 is performed in a singular network node or, in another embodiment, across many network nodes. The receiving, S32, S42, of the radio frequency characteristic 006 or the performance management counter 007 is performed in a first network node 701 or across a plurality of network nodes. It will be appreciated by one skilled in the art that the receiving of the radio frequency characteristic 006 or the performance management counter 007 can be the receiving of information inferred from radio frequency characteristic 006 or exposed as part of the performance management counter 007. The obtaining, S33, S43, of the environmental categorization parameter (i.e the parameter associated with an environmental categorization), is performed in a second network node 702 or across many network nodes and the initiation S44 or the sending S34 of the value obtained is performed in any of: the first network node, the second network node, a third network node 703, and several distributes network nodes within the computer system. The network node 003, 701, 702, 703 is in some embodiments a virtual network node.

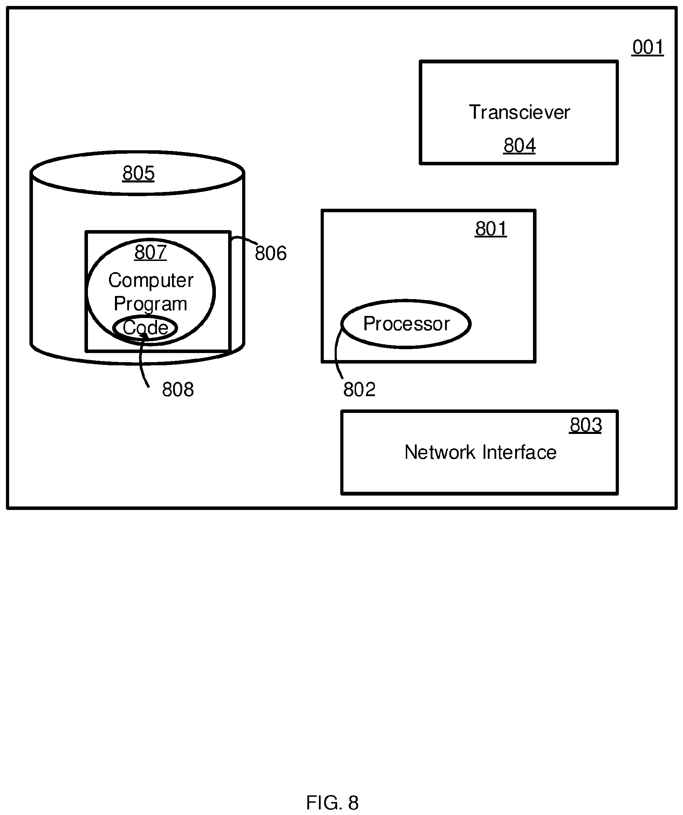

Figure 8 illustrates a block diagram of an embodiment of the computer system 001, which comprises a computer (e.g. in the form of a server host) 801 which includes one or more processors 802, e.g. any one of, a general purpose microprocessor, and one or more data processing circuits, such as an application specific integrated circuits, and field-programmable gate arrays. The computer system 001 in some embodiments further includes a network interface 803 to connect to a network. The network interface is in some embodiments used in communicating with network nodes of the computer system outside of the computer, or any other connections. The computer system 001 also comprises a transceiver 804 coupled to an antenna for wirelessly communicating with another network node or with a communication device outside of the computer system 001. The computer system 001 further includes a computer program product 805 in the form of a data storage for storing information, which may include one or more computer readable storage medium 806 in the form of non-volatile memories, and/or one or more volatile memories such as random-access memory. The computer program product 805 comprises a computer program 807, which comprises computer instructions or code 808. The computer readable storage medium 806 can be a non-transitory computer readable medium such as, a magnetic media where a hard disk is an example thereof, optical media, such as a DVD, and a flash memory The computer instructions 808 of the computer program are configured such that when executed by computer the computer instructions cause the computer to perform some or all of the functions and operations described herein.

The various embodiments described herein may be implemented in a recording medium readable by a computer or its similar device by employing for example, software, hardware or combinations thereof.

A software implementation of the embodiments described may be implemented as procedures and functions that may be implemented in separate modules and/or computer program parts, each of which is written to cause a computer system to perform one or more of the functions and operations described herein. Software codes may be implemented using a software application written in any suitable programming language.

While various embodiments of the present disclosure are described herein, it should be understood that they have been presented by the way of example only, and not limitation. Thus, the breadth and scope of the present disclosure should not be limited by any of the above-described exemplary embodiments. Moreover, any combination of the above-described elements in all possible variations thereof is comprised by the disclosure unless otherwise indicated herein or otherwise clearly contradicted by context. Additionally, while the processes described above and illustrated in the drawings are shown as a sequence of steps this was done for the sake of illustration. It is contemplated that some steps may be added, some steps omitted, the order of the steps may be re-arranged, and some steps may be performed in parallel.

## Claims

1. A method performed by a computer system (001) comprising one or more network nodes (003) for determining at least one parameter associated with an environmental categorization (601) of an area, the environmental categorization representing the area at a specified point in time or a specified time interval, the method being:
training (S31, S41) a machine learning model (002) using a set of training data representing a first set of radio frequency characteristics or a performance management counter;
receiving (S32, S42) at least one radio frequency characteristic (006) or a performance management counter (007), wherein the received radio frequency characteristic (006) is from radio frequency characteristics of radio waves of signals (009) propagated from at least one wireless communication device (008, 011) to a radio base station (010), and wherein information contained within the received performance management counter (007) is derived from radio frequency characteristics of radio waves of signals (009) propagated from at least one wireless communication device (008, 011) to a radio base station (010);
obtaining (S33, S43) the parameter associated with the environmental categorization (601), by using the machine learning model (002) after the training on the received radio frequency characteristic (006) or the received performance management counter (007); and
sending (S34) or initiating the sending of (S44) the parameter associated with the environmental categorization (601) of the area obtained using the machine learning model (002) to any one of: an information storage (013), a communication device (011), and a network node of the computer system (001) wherein the parameter associated with the environmental categorization (601) of the area comprises at least one traffic congestion parameter, wherein the traffic congestion parameter is at least an indication of vehicle traffic congestion and/or pedestrian traffic congestion in the area and the traffic congestion parameter comprises at least any one of a vehicle flow rate, a vehicle count, and a vehicle type.

2. The method according to claim 1, wherein the received radio frequency characteristic (006) or the performance management counter (007) includes at least one uplink pathloss value.

3. The method according to claim 1 or 2, wherein the received radio frequency characteristic (006) or the performance management counter (007) includes at least one doppler shift spread value.

4. The method according to any one of claim 1-3, wherein the computer system comprises a first network node (701) for receiving (S32, S42) the radio frequency characteristic (006) or performance management counter (007);
a second network node (702) for obtaining (S33, S43) the parameter associated with the environmental categorization (601) of the area using the machine learning model (002) on the received radio frequency characteristic (006) or received performance management counter (007); and
sending (S34) or initiate the sending (S44) of the parameter associated with the environmental categorization (601) of the area is performed by either the first network node (701), the second network node (702), or a third network node (703) comprised in the computer system (001).

5. A computer system (001) comprising one or more network nodes (003) for determining at least one area as a parameter associated with an environment categorization (601) of an area, at a specified point in time or a specified time interval; the network nodes (003) being configured to:
receive (S32, S42) at least one radio frequency characteristic (006) or performance management counter (007), wherein the received radio frequency characteristic (006) is from radio frequency characteristics of radio waves of signals (009) propagated from at least one wireless communication device (008, 011) to a radio base station (010), and wherein information contained within the received performance management counter (007) is derived from radio frequency characteristics of radio waves of signals (009) propagated from at least one wireless communication device (008, 011) to a radio base station (010);
obtain (S33, S43) the parameter associated with the environmental categorization from a machine learning model (002) that has been applied on the received radio frequency characteristic (002) or the received performance management counter (011); and
send (S34) or initiate the sending (S44) of the parameter associated with the environmental categorization (601), of the area, to any one off at least one information storage (013), a communication device (011), and a network node of the computer system and wherein the parameter associated with the environmental categorization (601) of the area comprises at least one traffic congestion parameter, wherein the traffic congestion parameter is at least an indication of vehicle traffic congestion and/or pedestrian traffic congestion in the area and the traffic congestion parameter comprises at least any one of a vehicle flow rate, a vehicle count, and a vehicle type.

6. The computer system (001) according to claim 5, comprising a first network node (701) for receiving (S32, S42) the radio frequency characteristic (006) or performance management counter (017),
a second network node (702) for obtaining (S33, S43) the parameter associated with the environmental categorization (601) of the area using the machine learning model (002) on the received radio frequency characteristic (006) or performance management counter (007).

7. The computer system (001) according to claim 6, wherein the sending (S34) or the initiation of the sending (S44) of the transmission of the obtained parameter associated with the environmental categorization (601) is performed in either the first network node (701), the second network node (702), or a third network node (703).

8. The computer system (001) according to any of claims 5-7, wherein the received radio frequency characteristic (006) or the performance management counter (007) includes at least one uplink pathloss value.

9. The computer system (001) according to any of claims 5-8, wherein the received radio frequency characteristic (006) or the performance management counter (007) includes at least one doppler shift spread value.

10. The computer system (001) according to any of claims 5-9, wherein the received radio frequency characteristic (006) or performance management counter (007) is received from an operation support system, or a business support system.

11. A computer program (807) for a computer system (001) for determining at least one parameter associated with an environmental categorization (601) of an area, the environmental categorization representing the area at a specified point in time or a specified time interval, wherein the computer program (807) comprising computer program code (808), which, when run on the computer system (001), causes the computer system to perform the steps of:
receiving (S32, S42) at least one radio frequency characteristic (006) or a performance management counter (007), wherein the received radio frequency characteristic (006) is from radio frequency characteristics of radio waves of signals (009) propagated from at least one wireless communication device (008, 011) to a radio base station (010), and wherein information contained within the received performance management counter (007) is derived from radio frequency characteristics of radio waves of signals (009) propagated from at least one wireless communication device (008, 011) to a radio base station (010),
obtaining (S33, S43), by using the received radio frequency characteristic (006) or performance management counter (007), and a machine learning model (002), the parameter associated with the environmental categorization of the area, and sending (S34) or initiating the sending (S44) of the parameter associated with the environmental categorization, obtained by the machine learning model (002) to any one of: at least one information storage (013), a communication device (011), and a network node of the computer system (006) and wherein the parameter associated with the environmental categorization (601) of the area comprises at least one traffic congestion parameter, wherein the traffic congestion parameter is at least an indication of vehicle traffic congestion and/or pedestrian traffic congestion in the area and the traffic congestion parameter comprises at least any one of a vehicle flow rate, a vehicle count, and a vehicle type.

## Patentansprüche

1. Verfahren, das von einem Computersystem (001) durchgeführt wird, das einen oder mehrere Netzwerkknoten (003) umfasst, zur Bestimmung mindestens eines Parameters, der mit einer Umgebungskategorisierung (601) eines Bereichs assoziiert ist, wobei die Umgebungskategorisierung den Bereich zu einem spezifizierten Zeitpunkt oder in einem spezifizierten Zeitintervall darstellt, wobei das Verfahren ist, wie folgt:
Trainieren (S31, S41) eines Maschinenlernmodells (002) unter Verwendung eines Satzes von Trainingsdaten, der einen ersten Satz von Hochfrequenzcharakteristiken oder einen Leistungsverwaltungszähler darstellt;
Empfangen (S32, S42) mindestens einer Hochfrequenzcharakteristik (006) oder eines Leistungsverwaltungszählers (007), wobei die empfangene Hochfrequenzcharakteristik (006) aus Hochfrequenzcharakteristiken von Funkwellen von Signalen (009) ist, die von mindestens einer drahtlosen Kommunikationsvorrichtung (008, 011) an eine Funkbasisstation (010) übermittelt werden, und wobei Informationen, die in dem empfangenen Leistungsverwaltungszähler (007) enthalten sind, von Hochfrequenzcharakteristiken von Funkwellen von Signalen (009) abgeleitet sind, die von mindestens einer drahtlosen Kommunikationsvorrichtung (008, 011) an eine Funkbasisstation (010) übermittelt werden;
Erhalten (S33, S43) des mit der Umgebungskategorisierung (601) assoziierten Parameters durch Verwenden des Maschinenlernmodells (002) nach dem Trainieren mit der empfangenen Hochfrequenzcharakteristik (006) oder dem empfangenen Leistungsverwaltungszähler (007); und
Senden (S34) oder Initiieren des Sendens (S44) des mit der Umgebungskategorisierung (601) des Bereichs assoziierten Parameters, der unter Verwendung des Maschinenlernmodells (002) erhalten wurde, an eines von Folgenden: einen Informationsspeicher (013), eine Kommunikationsvorrichtung (011) und einen Netzwerkknoten des Computersystems (001), wobei der mit der Umgebungskategorisierung (601) des Bereichs assoziierte Parameter mindestens einen Verkehrsüberlastungsparameter umfasst, wobei der Verkehrsüberlastungsparameter mindestens eine Anzeige von Fahrzeugverkehrsüberlastung und/oder Fußgängerverkehrsüberlastung in dem Bereich ist und der Verkehrsüberlastungsparameter mindestens eines von einer Fahrzeugflussrate, einer Fahrzeugzählung und einem Fahrzeugtyp umfasst.

2. Verfahren nach Anspruch 1, wobei die empfangene Hochfrequenzcharakteristik (006) oder der Leistungsverwaltungszähler (007) mindestens einen Uplink-Pfadverlustwert umfasst.

3. Verfahren nach Anspruch 1 oder 2, wobei die empfangene Hochfrequenzcharakteristik (006) oder der Leistungsverwaltungszähler (007) mindestens einen Dopplerverschiebungsspreizwert umfasst.

4. Verfahren nach einem der Ansprüche 1-3, wobei das Computersystem einen ersten Netzwerkknoten (701) zum Empfangen (S32, S42) der Hochfrequenzcharakteristik (006) oder des Leistungsverwaltungszählers (007) und
einen zweiten Netzwerkknoten (702) zum Erhalten (S33, S43) des mit der Umgebungskategorisierung (601) des Bereichs assoziierten Parameters unter Verwendung des Maschinenlernmodells (002) mit der empfangenen Hochfrequenzcharakteristik (006) oder dem empfangenen Leistungsverwaltungszähler (007) umfasst,
das Senden (S34) oder Initiieren des Sendens (S44) des mit der Umgebungskategorisierung (601) des Bereichs assoziierten Parameters entweder von dem ersten Netzwerkknoten (701), dem zweiten Netzwerkknoten (702) oder einem dritten Netzwerkknoten (703) durchgeführt wird, der in dem Computersystem (001) umfasst ist.

5. Computersystem (001), umfassend einen oder mehrere Netzwerkknoten (003) zum Bestimmen mindestens eines Bereichs als einen Parameter, der mit einer Umgebungskategorisierung (601) eines Bereichs zu einem spezifizierten Zeitpunkt oder in einem spezifizierten Zeitintervall assoziiert ist, wobei die Netzwerkknoten (003) zu Folgendem ausgelegt sind:
Empfangen (S32, S42) mindestens einer Hochfrequenzcharakteristik (006) oder eines Leistungsverwaltungszählers (007), wobei die empfangene Hochfrequenzcharakteristik (006) aus Hochfrequenzcharakteristiken von Funkwellen von Signalen (009) ist, die von mindestens einer drahtlosen Kommunikationsvorrichtung (008, 011) an eine Funkbasisstation (010) übermittelt werden, und wobei Informationen, die in dem empfangenen Leistungsverwaltungszähler (007) enthalten sind, von Hochfrequenzcharakteristiken von Funkwellen von Signalen (009) abgeleitet sind, die von mindestens einer drahtlosen Kommunikationsvorrichtung (008, 011) an eine Funkbasisstation (010) übermittelt werden;
Erhalten (S33, S43) des mit der Umgebungskategorisierung assoziierten Parameters von einem Maschinenlernmodell (002), das auf die empfangene Hochfrequenzcharakteristik (002) oder den empfangenen Leistungsverwaltungszähler (011) angewendet wurde; und
Senden (S34) oder Initiieren des Sendens (S44) des mit der Umgebungskategorisierung (601) des Bereichs assoziierten Parameters an eines von mindestens einem Informationsspeicher (013), einer Kommunikationsvorrichtung (011) und einem Netzwerkknoten des Computersystems, und wobei der mit der Umgebungskategorisierung (601) des Bereichs assoziierte Parameter mindestens einen Verkehrsüberlastungsparameter umfasst, wobei der Verkehrsüberlastungsparameter mindestens eine Anzeige von Fahrzeugverkehrsüberlastung und/oder Fußgängerverkehrsüberlastung in dem Bereich ist und der Verkehrsüberlastungsparameter mindestens eines von einer Fahrzeugflussrate, einer Fahrzeugzählung und einem Fahrzeugtyp umfasst.

6. Computersystem (001) nach Anspruch 5, umfassend einen ersten Netzwerkknoten (701) zum Empfangen (S32, S42) der Hochfrequenzcharakteristik (006) oder des Leistungsverwaltungszählers (017),
einen zweiten Netzwerkknoten (702) zum Erhalten (S33, S43) des mit der Umgebungskategorisierung (601) des Bereichs assoziierten Parameters unter Verwendung des Maschinenlernmodells (002) mit der die empfangenen Hochfrequenzcharakteristik (006) oder dem empfangenen Leistungsverwaltungszähler (007).

7. Computersystem (001) nach Anspruch 6, wobei das Senden (S34) oder die Initiierung des Sendens (S44) der Übertragung des erhaltenen Parameters, der mit der Umgebungskategorisierung (601) assoziiert ist, entweder von dem ersten Netzwerkknoten (701), dem zweiten Netzwerkknoten (702) oder einem dritten Netzwerkknoten (703) durchgeführt wird.

8. Computersystem (001) nach einem der Ansprüche 5-7, wobei die empfangene Hochfrequenzcharakteristik (006) oder der Leistungsverwaltungszähler (007) mindestens einen Uplink-Pfadverlustwert umfasst.

9. Computersystem (001) nach einem der Ansprüche 5-8, wobei die empfangene Hochfrequenzcharakteristik (006) oder der Leistungsverwaltungszähler (007) mindestens einen Dopplerverschiebungsspreizwert umfasst.

10. Computersystem (001) nach einem der Ansprüche 5-9, wobei die empfangene Hochfrequenzcharakteristik (006) oder der empfangene Leistungsverwaltungszähler (007) von einem Betriebsunterstützungssystem oder einem Geschäftsunterstützungssystem empfangen wird.

11. Computerprogramm (807) für ein Computersystem (001) zum Bestimmen mindestens eines Parameters, der mit einer Umgebungskategorisierung (601) eines Bereichs assoziiert ist, wobei die Umgebungskategorisierung den Bereich zu einem spezifizierten Zeitpunkt oder in einem spezifizierten Zeitintervall darstellt, wobei das Computerprogramm (807) Computerprogrammcode (808) umfasst, der bei Ausführung auf dem Computersystem (001) das Computersystem zum Ausführen der folgenden Schritte veranlasst:
Empfangen (S32, S42) mindestens einer Hochfrequenzcharakteristik (006) oder eines Leistungsverwaltungszählers (007), wobei die empfangene Hochfrequenzcharakteristik (006) aus Hochfrequenzcharakteristiken von Funkwellen von Signalen (009) ist, die von mindestens einer drahtlosen Kommunikationsvorrichtung (008, 011) an eine Funkbasisstation (010) übermittelt werden, und wobei Informationen, die in dem empfangenen Leistungsverwaltungszähler (007) enthalten sind, von Hochfrequenzcharakteristiken von Funkwellen von Signalen (009) abgeleitet sind, die von mindestens einer drahtlosen Kommunikationsvorrichtung (008, 011) an eine Funkbasisstation (010) übermittelt werden;
Erhalten (S33, S43) des mit der Umgebungskategorisierung des Bereichs assoziierten Parameters durch Verwenden der empfangenen Hochfrequenzcharakteristik (006) oder des empfangenen Leistungsverwaltungszählers (007) und eines Maschinenlernmodells (002) und Senden (S34) oder Initiieren des Sendens (S44) des mit der Umgebungskategorisierung des Bereichs assoziierten Parameters, der durch das Maschinenlernmodell (002) erhalten wurde, an eines von Folgenden: einen Informationsspeicher (013), eine Kommunikationsvorrichtung (011) und einen Netzwerkknoten des Computersystems (006), und wobei der mit der Umgebungskategorisierung (601) des Bereichs assoziierte Parameter mindestens einen Verkehrsüberlastungsparameter umfasst, wobei der Verkehrsüberlastungsparameter mindestens eine Anzeige von Fahrzeugverkehrsüberlastung und/oder Fußgängerverkehrsüberlastung in dem Bereich ist und der Verkehrsüberlastungsparameter mindestens eines von einer Fahrzeugflussrate, einer Fahrzeugzählung und einem Fahrzeugtyp umfasst.

## Revendications

1. Procédé réalisé par un système informatique (001) comprenant un ou plusieurs nœuds de réseau (003) pour déterminer au moins un paramètre associé à une catégorisation environnementale (601) d'une zone, la catégorisation environnementale représentant la zone à un moment spécifié ou dans un intervalle de temps spécifié, le procédé comprenant :
l'entraînement (S31, S41) d'un modèle d'apprentissage automatique (002) à l'aide d'un ensemble de données d'entraînement représentant un premier ensemble de caractéristiques de fréquence radio ou un compteur de gestion de performance ;
la réception (S32, S42) d'au moins une caractéristique de fréquence radio (006) ou d'un compteur de gestion de performance (007), dans lequel la caractéristique de fréquence radio (006) reçue est parmi des caractéristiques de fréquence radio d'ondes radio de signaux (009) propagés depuis au moins un dispositif de communication sans fil (008, 011) jusqu'à une station de base radio (010), et dans lequel des informations contenues dans le compteur de gestion de performance (007) reçu sont déduites de caractéristiques de fréquence radio d'ondes radio de signaux (009) propagés depuis au moins un dispositif de communication sans fil (008, 011) jusqu'à une station de base radio (010) ;
l'obtention (S33, S43) du paramètre associé à la catégorisation environnementale (601), à l'aide du modèle d'apprentissage automatique (002) après l'entraînement sur la caractéristique de fréquence radio (006) reçue ou sur le compteur de gestion de performance (007) reçu ; et
l'envoi (S34) ou l'initiation de l'envoi (S44) du paramètre associé à la catégorisation environnementale (601) de la zone, obtenu à l'aide du modèle d'apprentissage automatique (002) à l'un quelconque parmi : un stockage d'informations (013), un dispositif de communication (011) et un nœud de réseau du système informatique (001), dans lequel le paramètre associé à la catégorisation environnementale (601) de la zone comprend au moins un paramètre de congestion de trafic, dans lequel le paramètre de congestion de trafic est au moins une indication d'une congestion de trafic de véhicules et/ou d'une congestion de trafic de piétons dans la zone et le paramètre de congestion de trafic comprend au moins l'un quelconque parmi un débit de véhicules, un compte de véhicules et un type de véhicule.

2. Procédé selon la revendication 1, dans lequel la caractéristique de fréquence radio (006) reçue ou le compteur de gestion de performance (007) reçu inclut au moins une valeur d'affaiblissement de propagation de liaison montante.

3. Procédé selon la revendication 1 ou 2, dans lequel la caractéristique de fréquence radio (006) reçue ou le compteur de gestion de performance (007) reçu inclut au moins une valeur d'étalement de décalage Doppler.

4. Procédé selon l'une quelconque des revendications 1 à 3, dans lequel le système informatique comprend un premier nœud de réseau (701) destiné à la réception (S32, S42) de la caractéristique de fréquence radio (006) ou du compteur de gestion de performance (007) ;
un deuxième nœud de réseau (702) destiné à l'obtention (S33, S43) du paramètre associé à la catégorisation environnementale (601) de la zone à l'aide du modèle d'apprentissage automatique (002) sur la caractéristique de fréquence radio (006) reçue ou le compteur de gestion de performance (007) reçu ; et
l'envoi (S34) ou l'initiation de l'envoi (S44) du paramètre associé à la catégorisation environnementale (601) de la zone est réalisé par le premier nœud de réseau (701), le deuxième nœud de réseau (702) ou un troisième nœud de réseau (703) compris dans le système informatique (001).

5. Système informatique (001) comprenant un ou plusieurs nœuds de réseau (003) pour déterminer au moins une zone en tant qu'un paramètre associé à une catégorisation environnementale (601) d'une zone, à un moment spécifié ou dans un intervalle de temps spécifié, les nœuds de réseau (003) étant configurés pour :
recevoir (S32, S42) au moins une caractéristique de fréquence radio (006) ou un compteur de gestion de performance (007), dans lequel la caractéristique de fréquence radio (006) reçue est parmi des caractéristiques de fréquence radio d'ondes radio de signaux (009) propagés depuis au moins un dispositif de communication sans fil (008, 011) jusqu'à une station de base radio (010), et dans lequel des informations contenues dans le compteur de gestion de performance (007) reçu sont déduites de caractéristiques de fréquence radio d'ondes radio de signaux (009) propagés depuis au moins un dispositif de communication sans fil (008, 011) jusqu'à une station de base radio (010) ;
obtenir (S33, S43) le paramètre associé à la catégorisation environnementale depuis un modèle d'apprentissage automatique (002) qui a été appliqué sur la caractéristique de fréquence radio (002) reçue ou sur le compteur de gestion de performance (011) reçu ; et
envoyer (S34) ou initier l'envoi (S44) du paramètre associé à la catégorisation environnementale (601) de la zone à l'un quelconque parmi au moins un stockage d'informations (013), un dispositif de communication (011) et un nœud de réseau du système informatique et dans lequel le paramètre associé à la catégorisation environnementale (601) de la zone comprend au moins un paramètre de congestion de trafic, dans lequel le paramètre de congestion de trafic est au moins une indication d'une congestion de trafic de véhicules et/ou d'une congestion de trafic de piétons dans la zone et le paramètre de congestion de trafic comprend au moins l'un quelconque parmi un débit de véhicules, un compte de véhicules et un type de véhicule.

6. Système informatique (001) selon la revendication 5, comprenant un premier nœud de réseau (701) destiné à la réception (S32, S42) de la caractéristique de fréquence radio (006) ou du compteur de gestion de performance (017) ;
un deuxième nœud de réseau (702) destiné à l'obtention (S33, S43) du paramètre associé à la catégorisation environnementale (601) de la zone à l'aide du modèle d'apprentissage automatique (002) sur la caractéristique de fréquence radio (006) reçue ou le compteur de gestion de performance (007) reçu.

7. Système informatique (001) selon la revendication 6, dans lequel l'envoi (S34) ou l'initiation de l'envoi (S44) de la transmission du paramètre obtenu associé à la catégorisation environnementale (601) est réalisé dans le premier nœud de réseau (701), le deuxième nœud de réseau (702) ou un troisième nœud de réseau (703).

8. Système informatique (001) selon l'une quelconque des revendications 5 à 7, dans lequel la caractéristique de fréquence radio (006) reçue ou le compteur de gestion de performance (007) reçu inclut au moins une valeur d'affaiblissement de propagation de liaison montante.

9. Système informatique (001) selon l'une quelconque des revendications 5 à 8, dans lequel la caractéristique de fréquence radio (006) reçue ou le compteur de gestion de performance (007) reçu inclut au moins une valeur d'étalement de décalage Doppler.

10. Système informatique (001) selon l'une quelconque des revendications 5 à 9, dans lequel la caractéristique de fréquence radio (006) reçue ou le compteur de gestion de performance (007) reçu est reçu depuis un système de prise en charge d'opérations ou depuis un système de prise en charge d'activités commerciales.

11. Programme informatique (807) d'un système informatique (001) destiné à déterminer au moins un paramètre associé à une catégorisation environnementale (601) d'une zone, la catégorisation environnementale représentant la zone à un moment spécifié ou dans un intervalle de temps spécifié, dans lequel le programme informatique (807) comprend un code de programme informatique (808) qui, lorsqu'il est exécuté sur le système informatique (001), amène le système informatique à réaliser les étapes suivantes :
la réception (S32, S42) d'au moins une caractéristique de fréquence radio (006) ou d'un compteur de gestion de performance (007), dans lequel la caractéristique de fréquence radio (006) reçue est parmi des caractéristiques de fréquence radio d'ondes radio de signaux (009) propagés depuis au moins un dispositif de communication sans fil (008, 011) jusqu'à une station de base radio (010), et dans lequel des informations contenues dans le compteur de gestion de performance (007) reçu sont déduites de caractéristiques de fréquence radio d'ondes radio de signaux (009) propagés depuis au moins un dispositif de communication sans fil (008, 011) jusqu'à une station de base radio (010),
l'obtention (S33, S43), à l'aide de la caractéristique de fréquence radio (006) reçue ou du compteur de gestion de performance (007) reçu et d'un modèle d'apprentissage automatique (002), du paramètre associé à la catégorisation environnementale de la zone, et l'envoi (S34) ou l'initiation de l'envoi (S44) du paramètre associé à la catégorisation environnementale, obtenu à l'aide du modèle d'apprentissage automatique (002) à l'un quelconque parmi : au moins un stockage d'informations (013), un dispositif de communication (011) et un nœud de réseau du système informatique (006), et dans lequel le paramètre associé à la catégorisation environnementale (601) de la zone comprend au moins un paramètre de congestion de trafic, dans lequel le paramètre de congestion de trafic est au moins une indication d'une congestion de trafic de véhicules et/ou d'une congestion de trafic de piétons dans la zone et le paramètre de congestion de trafic comprend au moins l'un quelconque parmi un débit de véhicules, un compte de véhicules et un type de véhicule.
